# EUROPEAN PATENT APPLICATION

(11) **EP 4 478 494 A1**
(43) Date of publication of application: **18.12.2024**
(21) Application number: 22925442.0
(22) Date of filing: 14.02.2022
(51) Int. Cl.: H01M 50/147, H01M 10/0525

(54) **INSULATION SHEET, BATTERY CELL AND ELECTRONIC APPARATUS**

(71) Applicant: Ningde Amperex Technology Limited, Ningde, Fujian 352100 (CN)
(72) Inventor: YU, Jing, Ningde, Fujian 352100 (CN); WANG, Xinlei, Ningde, Fujian 352100 (CN)
(74) Representative: Icosa
(86) International application number: PCT/CN2022/076212
(87) International publication number: WO 2023/151080

(57) **Abstract**

This application discloses an insulation spacer. The insulation spacer is applicable to a battery cell. The insulation spacer includes a first wall face and a second wall face distributed opposite to each other along a thickness direction of the insulation spacer. The first wall face is configured to face an electrode assembly of the battery cell. The insulation spacer further includes a first edge wall located between the first wall face and the second wall face. A first opening is created on the first wall face or the first edge wall. A second opening is created on the second wall face. A first channel is created inside the insulation spacer. One end of the first channel communicates to the first opening. Another end of the first channel communicates to the second opening. The insulation spacer is configured to enable passage of a tab. The insulation spacer in this application, on the one hand, reduces the risk that the first tab contacts the housing of the battery and gives rise to a short circuit, thereby improving the safety performance of the battery; on the other hand, makes a tab adhesive omissible on the first tab, thereby simplifying the internal structure of the battery containing the insulation spacer, and reducing the material cost and processing cost of the battery containing the insulation spacer.

## Description

### TECHNICAL FIELD

This application relates to the technical field of batteries, and in particular, to an insulation spacer, a battery cell, and an electronic device.

### BACKGROUND

A battery cell contains an insulation spacer and an electrode assembly. The insulation spacer can support a tab of the electrode assembly, so as to facilitate electrical connection between the tab and an electrode post. An existing insulation spacer is simple in structure, and makes the tab prone to contact a housing of the battery cell to cause a short circuit. Therefore, the safety performance of an existing battery cell is relatively low.

### SUMMARY

Some embodiments of this application provide an insulation spacer, a battery cell, and an electronic device to improve safety of the battery cell containing the insulation spacer.

To solve the above technical problem, one of the technical solutions disclosed in this application is to provide an insulation spacer. The insulation spacer is applicable to a battery cell. The insulation spacer includes a first wall face and a second wall face distributed opposite to each other along a thickness direction of the insulation spacer. The first wall face is configured to face an electrode assembly of the battery cell. The insulation spacer further includes a first edge wall located between the first wall face and the second wall face. A first opening is created on the first wall face or the first edge wall. A second opening is created on the second wall face. A first channel is created inside the insulation spacer. One end of the first channel communicates to the first opening. Another end of the first channel communicates to the second opening. The insulation spacer is configured to enable a first tab of the electrode assembly to pass through the first opening, the first channel, and the second opening in sequence and then bend until the first tab closely fits or is spaced apart from the second wall face. In the above technical solution, on the one hand, the insulation spacer reduces the risk that the first tab contacts the housing of the battery and gives rise to a short circuit, thereby improving the safety performance of the battery. On the other hand, the insulation spacer makes a tab adhesive omissible on the first tab, thereby simplifying the internal structure of the battery containing the insulation spacer, and reducing the material cost and processing cost of the battery containing the insulation spacer.

In some embodiments, the first channel includes a first planar wall. One end of the first planar wall extends to the first opening. Another end of the first planar wall extends to the second opening. The first planar wall is configured to be able to closely fit, or be spaced apart from, a wall face of the first tab, the wall face being distributed along a thickness direction of the first tab. In the above technical solution, the first tab can pass through the first channel along a single direction (that is, the direction directed from the first opening to the second opening). The first tab does not need to be bent in the first channel. The first tab passes through the first channel in a very convenient way, thereby improving the processing efficiency of the battery cell as a whole.

In some embodiments, the first channel further includes a second planar wall. One end of the second planar wall extends to the first opening. Another end of the second planar wall extends to the second opening. The second planar wall is spaced apart from the first planar wall. A clearance between the first planar wall and the second planar wall is configured to accommodate the first tab. A spacing L₁ between the first planar wall and the second planar wall as well as a thickness L₂ of the first tab satisfy: 2 ≤ L₁/L₂ ≤ 15. In the above technical solution, it has been demonstrated that when 2 ≤ L₁/L₂ ≤ 15, the first tab is enabled to pass through the clearance between the first planar wall and the second planar wall smoothly without leaving an overlarge clearance that impairs the function of constraining the first tab.

In some embodiments, an angle α between a plane formed by extending the first planar wall and a plane formed by extending the second planar wall satisfies: 0° ≤ α ≤ 45°. The above technical solution facilitates processing of the first planar wall and the second planar wall.

In some embodiments, the first opening is positioned at a junction between the first wall face and the first edge wall. Compared to the structure in which the first opening is positioned on only the first wall face, the above technical solution enables the first opening to match the position of the first tab on the first electrode assembly, and makes it convenient to arrange the relative position between the insulation spacer and the electrode assembly. Compared to the structure in which the first opening is positioned on only the first edge wall, the above technical solution enables the first tab to be embedded downward for a specified distance along a direction perpendicular to the first edge wall, thereby positioning the first tab more firmly, and reducing the space occupied by the first tab and the insulation spacer as a whole.

In some embodiments, the first planar wall and the first opening intersect at a first opening edge. The first opening edge is located on the first wall face. The first opening edge extends along a length direction of the first edge wall. The second planar wall and the first opening intersect at a second opening edge. The second opening edge is located on the first edge wall. The second opening edge extends along a length direction of the first edge wall. In the above technical solution, the structure of the first opening implements a closer match of the relative position between the electrode assembly and the insulation spacer, and makes it convenient for the first tab to pass through the insulation spacer.

In some embodiments, viewed along a direction perpendicular to the first wall face, a spacing L₃ between the first opening edge and the second opening edge satisfies: 0.5 ≤ L₂/L₃ ≤ 2. In the above technical solution, the first tab is enabled to be down-embedded into the first opening, thereby avoiding occupation of an excessive space in the battery cell, and also making the first opening be of an appropriate size that facilitates processing.

In some embodiments, the insulation spacer further includes a second edge wall. The second edge wall is disposed between the first wall face and the second wall face. The second edge wall is arranged opposite to the first edge wall. The first planar wall and the second opening intersect at a third opening edge. The third opening edge extends along a length direction of the second edge wall. The second planar wall and the second opening intersect at a fourth opening edge. The fourth opening edge is located on one side, oriented away from the second edge wall, of the third opening edge. The fourth opening edge extends along the length direction of the second edge wall. In the above technical solution, the structure of the second opening implements a closer match of the relative position between the electrode assembly and the insulation spacer, and makes it convenient for the first tab of the electrode assembly to pass through the second wall face of the insulation spacer.

In some embodiments, along a direction directed from the first edge wall to the second edge wall, a distance L₄ from the fourth opening edge to the first edge wall and a distance L₅ from the third opening edge to the second edge wall satisfy: 1 ≤ L₄/L₅ ≤ 10. In the above technical solution, the first tab extends into the first channel from a position close to the first edge wall and then is led out from a position close to the second edge wall, thereby further facilitating the extension arrangement of the first tab.

In some embodiments, along a direction directed from the first edge wall to the second edge wall, a spacing L₆ between the third opening edge and the fourth opening edge as well as the thickness L₂ of the first tab satisfy: 1 < L₂/L₆ ≤ 3. In the above technical solution, the first tab is facilitated to pass through the second opening, and the first opening is made to be of an appropriate size.

In some embodiments, a raised portion is disposed on the second wall face. The raised portion is disposed between the second opening and the second edge wall. In the above technical solution, the raised portion can reduce the probability of a short circuit caused by contact between the first tab and the housing when the bent part of the first tab at the second opening moves toward the second edge wall and comes into contact with the housing of the battery cell, thereby improving the safety performance of the battery cell.

In some embodiments, the raised portion includes a third wall face oriented away from the second edge wall. The third wall face and the second opening intersect at the third opening edge. In the above technical solution, the third wall face of the raised portion can abut on the bent part of the first tab at the second opening, thereby providing a support for the first tab and improving the firmness of the positioning of the first tab.

In some embodiments, the raised portion includes a fourth wall face oriented away from the first edge wall. The fourth wall face and the second edge wall are coplanar. The above technical solution can increase the structural strength of the raised portion.

In some embodiments, the insulation spacer further includes a third edge wall located between the first edge wall and the second edge wall. The third edge wall is located between the first wall face and the second wall face. The first opening, the second opening, and the first channel all extend to the third edge wall so that the first tab is able to extend from the third edge wall into the first channel. The first tab passes through the first opening, the first channel, and the second opening in sequence after extending into the first channel. In the above technical solution, the first tab is enabled to extend into the first channel from the third edge wall without a need to extend into the first channel from the first opening, thereby reducing the difficulty of extending the first tab into the first channel, and reducing the processing cost of the battery cell.

In some embodiments, a third opening is created on the first wall face or the first edge wall. A fourth opening is created on the second wall face. A second channel is created inside the insulation spacer. One end of the second channel communicates to the third opening, and another end of the second channel communicates to the fourth opening. The insulation spacer is configured to enable a second tab of the electrode assembly to pass through the third opening, the second channel, and the fourth opening in sequence and then bend until the second tab closely fits the second wall face, where the second tab is of an opposite polarity to the first tab. The above technical solution can reduce the risk of a short circuit caused by contact between the second tab and the housing of the battery cell, and also reduce or remove the tab adhesive on the second tab, thereby reducing the number of parts of the battery cell and reducing the material cost of the battery cell.

A second aspect of this application further provides a battery cell. The battery cell includes: the insulation spacer disclosed in any one of the above embodiments; an electrode assembly, disposed on a side on which a first surface of the insulation spacer is positioned, where the electrode assembly includes the first tab, the first tab passes through the first opening, the first channel, and the second opening in sequence, and bends to closely fit the second wall face, and the first tab includes a connecting portion located on a side on which the second wall face of the insulation spacer is positioned; a housing, defining an accommodation cavity, where both the electrode assembly and the insulation spacer are disposed in the accommodation cavity; and a feedthrough connector, passing through the housing, where an end portion, located in the accommodation cavity, of the feedthrough connector is electrically connected to a wall face, oriented away from the insulation spacer, of the connecting portion. The above technical solution can prevent the risk of a short circuit of the battery cell, save the tab adhesive, and reduce the material cost.

A third aspect of this application further provides an electronic device. The electronic device includes the battery cell.

A first channel is created in the insulation spacer provided in an embodiment of this application. The two ends of the first channel communicates to the first opening located on the first wall face or the first edge wall and the second opening located on the second wall face, respectively. The insulation spacer can pass through the first opening, the first channel, and the second opening in sequence, and then bend to closely fit the second wall face. In this way, on the one hand, the insulation spacer reduces the risk that the first tab contacts the housing of the battery and gives rise to a short circuit, thereby improving the safety performance of the battery. On the other hand, the insulation spacer makes a tab adhesive omissible on the first tab, thereby simplifying the internal structure of the battery containing the insulation spacer, and reducing the material cost and processing cost of the battery containing the insulation spacer.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a three-dimensional schematic diagram of an insulation spacer according to a first embodiment of this application;
FIG. 2 is a three-dimensional schematic diagram of an insulation spacer according to a first embodiment of this application, where the insulation spacer is partially sectioned;
FIG. 3 is a three-dimensional schematic diagram of an insulation spacer according to a second embodiment of this application;
FIG. 4 is a three-dimensional schematic diagram of an insulation spacer according to a second embodiment of this application, where the insulation spacer is partially sectioned;
FIG. 5 is a three-dimensional schematic diagram of an insulation spacer according to a third embodiment of this application;
FIG. 6 is a three-dimensional schematic diagram of an insulation spacer according to a third embodiment of this application, where the insulation spacer is partially sectioned;
FIG. 7 is a schematic side view of an insulation spacer viewed along a direction X according to a third embodiment of this application;
FIG. 8 is a cross-sectional schematic diagram of an insulation spacer fully sectioned and viewed along a direction Y according to a third embodiment of this application;
FIG. 9 is a cross-sectional schematic diagram of an insulation spacer fully sectioned and viewed along a direction Y according to a fourth embodiment of this application;
FIG. 10 is a three-dimensional schematic diagram of an insulation spacer according to a fifth embodiment of this application;
FIG. 11 is a cross-sectional schematic diagram of an insulation spacer fully sectioned and viewed along a direction Y according to a sixth embodiment of this application;
FIG. 12 is a close-up view of a part in FIG. 11;
FIG. 13 is a three-dimensional schematic diagram of an insulation spacer according to a sixth embodiment of this application;
FIG. 14 is a three-dimensional schematic diagram of an insulation spacer according to a seventh embodiment of this application; and
FIG. 15 is a cross-sectional schematic diagram of a battery cell fully sectioned and viewed along a direction Y according to a first embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

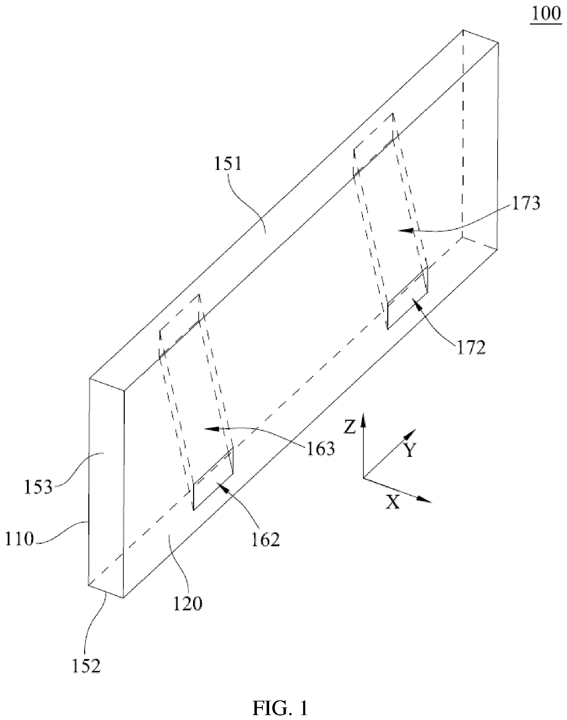

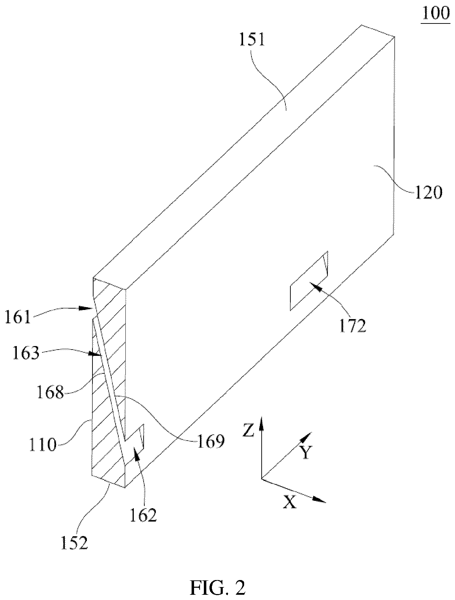

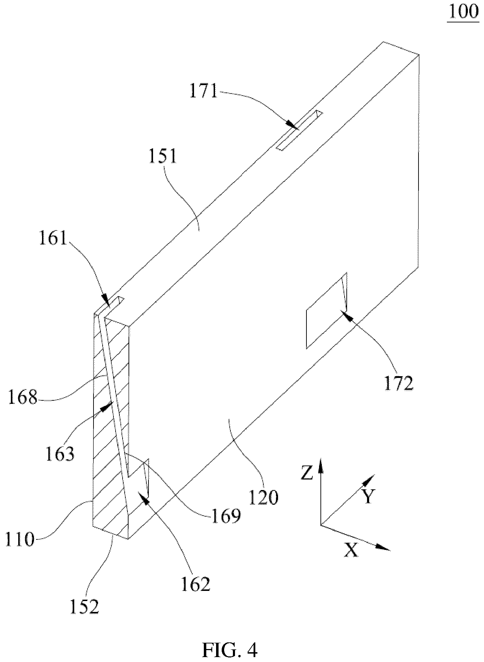

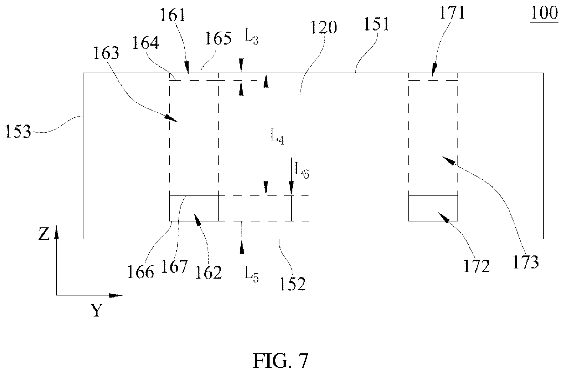

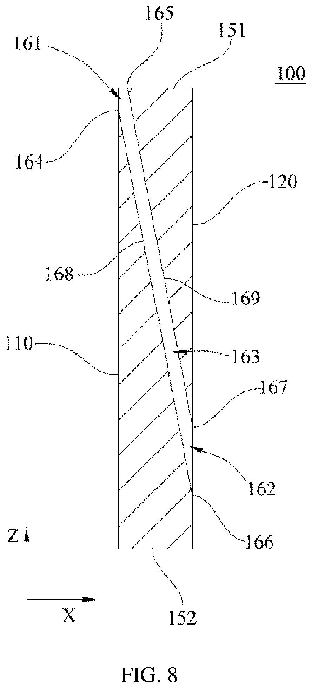

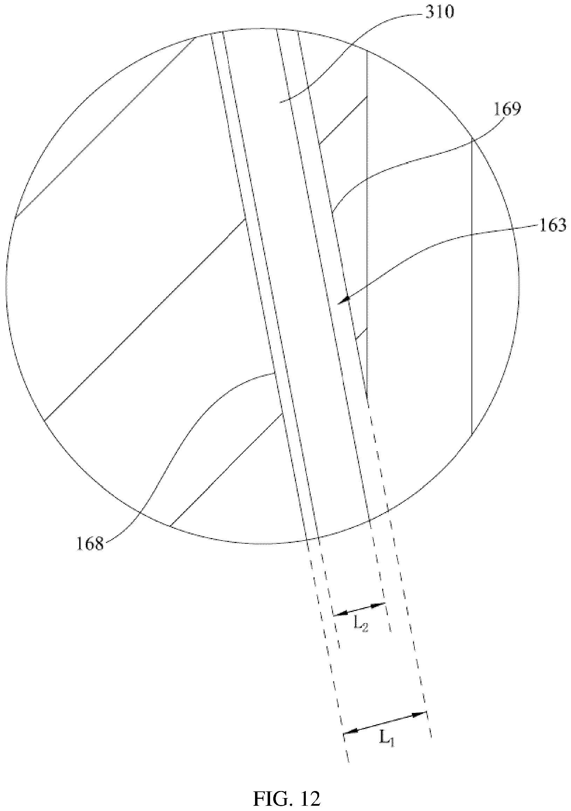

Referring to FIG. 1 to FIG. 14, an embodiment of this application provides an insulation spacer 100. The insulation spacer 100 is applicable to a battery cell 10. The battery cell 10 includes the insulation spacer 100. The battery cell 10 further includes a housing 200, a feedthrough connector 400, and an electrode assembly 300. The electrode assembly 300 and the insulation spacer 100 are disposed in the housing 200. The feedthrough connector 400 passes through the housing 200. One end, located in the housing 200, of the feedthrough connector is connected to the electrode assembly 300. One end, located outside the housing 200, of the feedthrough connector is configured to export electrical energy out of the battery cell 10. The electrode assembly 300 includes at least two tabs of different polarities. For ease of description, the two tabs are hereinafter referred to as a first tab 310 and a second tab respectively.

The insulation spacer 100 includes a first wall face 110 and a second wall face 120 distributed opposite to each other along a thickness direction (that is, direction X) of the insulation spacer. The first wall face 110 is configured to face the electrode assembly 300 of the battery cell 10. The second wall face 120 faces the feedthrough connector 400 (which, specifically, may be an electrode post). The first tab 310 and the second tab are electrically connected to the feedthrough connector 400 after spanning the insulation spacer 100. The insulation spacer 100 can, on the one hand, prevent the feedthrough connector 400 from being connected to other parts of the electrode assembly 300, and on the other hand, serve to support the first tab 310 and the second tab.

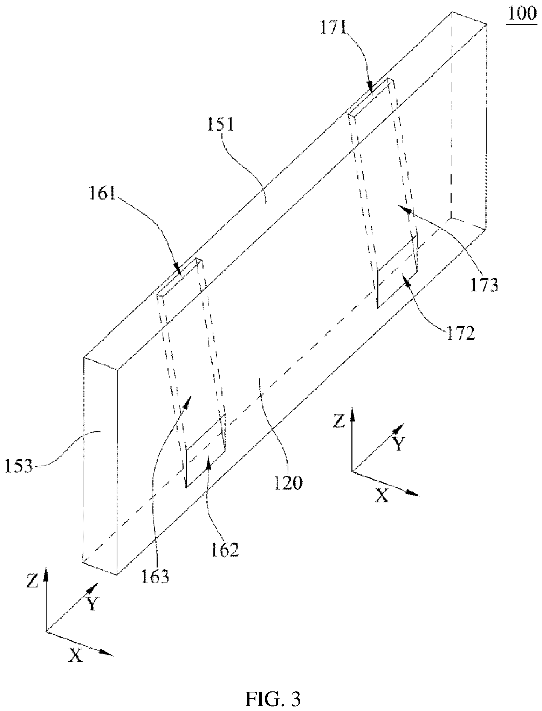

Referring to FIG. 1 to FIG. 6, the insulation spacer 100 further includes an annular edge wall located between the first wall face 110 and the second wall face 120. The annular edge wall includes a first edge wall 151. In an embodiment, a first opening 161 is created on the first wall face 110 or the first edge wall 151. A second opening 162 is created on the second wall face 120. A first channel 163 is created inside the insulation spacer 100. One end of the first channel 163 communicates to the first opening 161. Another end of the first channel communicates to the second opening 162. The insulation spacer 100 is configured to enable a first tab 310 to pass through the first opening 161, the first channel 163, and the second opening 162 in sequence and then bend until the first tab closely fits or is spaced apart from the second wall face 120. In one embodiment of the above technical solution, referring to FIG. 1 to FIG. 2, the first opening 161 is created on the first wall face 110. The second opening 162 is created on the second wall face 120. During assembling, the first tab 310 can extend into the first channel 163 through the first opening 161 on the first wall face 110, and then be led out of the second wall face 120 through the second opening 162. Finally, the first tab is bent to get spaced apart from or closely fit the second wall face 120. In another embodiment of the above technical solution, referring to FIG. 3 to FIG. 4, the first opening 161 is created on the first edge wall 151. The second opening 162 is created on the second wall face 120. During assembling, the first tab 310 can extend into the first channel 163 through the first opening 161 on the first edge wall 151, and then be led out of the second wall face 120 through the second opening 162. Finally, the first tab is bent to get spaced apart from or closely fit the second wall face 120.

Because the first tab 310 passes through the first opening 161, the first channel 163, and the second opening 162 in sequence and then bends to closely fit or be spaced apart from the second wall 120, the first tab 310 can be supported and constrained by the opening edge of the first opening 161, an inner wall of the first channel 163, and the opening edge of the second opening 162, thereby making the first tab 310 hardly movable for a substantial distance after being assembled, reducing the risk of short-circuiting of the first tab 310, and improving the safety performance of the battery cell 10 containing the insulation spacer 100. On the other hand, because a part, located in the first channel 163, of the first tab 310 is prevented from contacting other parts of the electrode assembly 300 to cause a short circuit, the tab adhesive disposed on the first tab 310 can be reduced or removed (the tab adhesive is disposed on existing tabs to prevent the positive tab from contacting the current collector of the negative electrode plate to cause a short circuit), thereby reducing the number of parts of the battery cell 10 containing the insulation spacer 100, and reducing the material cost and processing cost of the battery cell 10.

The shapes and structures of the first channel 163, the first opening 161, and the second opening 162 depend on specific needs, and may be any shape and structure as long as the first tab 310 can pass through such structures. Referring to FIG. 1 to FIG. 6, in an embodiment, the first channel 163 includes a first planar wall 168. One end of the first planar wall 168 extends to the first opening 161. Another end of the first planar wall extends to the second opening 162. The first planar wall 168 is configured to be able to closely fit, or be spaced apart from, a wall face of the first tab 310, the wall face being distributed along a thickness direction of the first tab. Because the two ends of the first planar wall 168 extend to the first opening 161 and the second opening 162 respectively, the first tab 310 is enabled to pass through the first channel 163 along a single direction (that is, the direction directed from the first opening 161 to the second opening 162). The first tab 310 does not need to be bent in the first channel 163. The first tab 310 passes through the first channel 163 in a very convenient way, thereby improving the processing efficiency of the battery cell 10 as a whole.

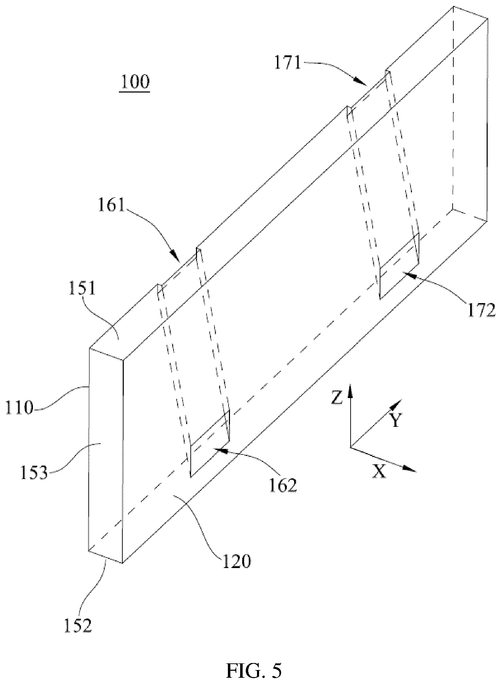

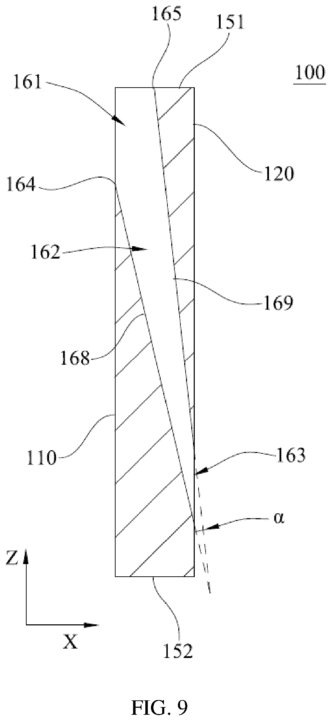

In some embodiments, the first channel 163 further includes a second planar wall 169. One end of the second planar wall 169 extends to the first opening 161. Another end of the second planar wall extends to the second opening 162. The second planar wall 169 and the first planar wall 168 are spaced apart, and specifically, may be arranged at an acute angle or in parallel. Referring to FIG. 5 to FIG. 8, in an embodiment, the first planar wall 168 and the second planar wall 169 are arranged in a parallel. That is, the angle α between the plane formed by extending the first planar wall 168 and the wall face formed by extending the second planar wall 169 is 0°. Referring to FIG. 9, in an embodiment, the plane formed by extending the first planar wall 168 and the plane formed by extending the second planar wall 169 intersect at an acute angle. Specifically, the angle α may satisfy: 0° < α ≤ 45°. As an example, α may be 5°, 10°, 15°, 20°, 25°, 30°, 40°, 45°, or the like. In some embodiments, when the plane formed by extending the first planar wall 168 is at an acute angle to the plane formed by extending the second planar wall 169, the line of intersection between the two planes may be perpendicular to the direction directed from the first opening 161 to the second opening 162.

Referring to FIG. 5 to FIG. 8 and FIG. 11, the clearance between the first planar wall 168 and the second planar wall 169 is configured to accommodate the first tab 310. The size of the clearance between the first planar wall 168 and the second planar wall 169 depends on specific needs, and may be any size as long as the clearance is larger than the thickness of the first tab 310 and allows passage of the first tab 310. In an embodiment, a spacing L₁ between the first planar wall 168 and the second planar wall 169 as well as a thickness L₂ of the first tab 310 satisfy: 2 ≤ L₁/L₂ <_ 15. As an example, the value of the L₁/L₂ ratio may be 2, 4, 6, 8, 10, 12, 14, 15, or the like. It has been demonstrated that when 2 ≤ L₁/L₂ ≤ 15, the first tab 310 is enabled to pass through the clearance between the first planar wall 168 and the second planar wall 169 smoothly without leaving an overlarge clearance that impairs the function of constraining the first tab 310. It is hereby noted that the "L₁" above means the spacing at any position between the first planar wall 168 and the second planar wall 169. When the first planar wall 168 is arranged parallel to the second planar wall 169, the spacings Li at all positions between the first planar wall 168 and the second planar wall 169 are equal. When the plane formed by extending the first planar wall 168 is at an acute angle to the plane formed by extending the second planar wall 169, the spacing L₁ between the first planar wall 168 and the second planar wall 169 varies at different positions along a direction perpendicular to the line of intersection of the two planar walls, satisfying: 2 ≤ L₁/L₂ ≤ 15.

Referring to FIG. 5 to FIG. 8, in an embodiment, the first opening 161 is positioned at a junction between the first wall face 110 and the first edge wall 151. In other words, a part of the first opening 161 is positioned on the first edge wall 151, and another part of the first opening is positioned on the first wall face 110. Compared to the structure in which the first opening 161 is positioned on only the first wall face 110, the above arrangement enables the first opening 161 to match the position of the first tab 310 on the first electrode assembly 300, and makes it convenient to arrange the relative position between the insulation spacer 100 and the electrode assembly 300. Compared to the structure in which the first opening 161 is positioned on only the first edge wall 151, the above arrangement enables the first tab 310 to be embedded downward for a specified distance along a direction perpendicular to the first edge wall 151, thereby positioning the first tab 310 more firmly, and reducing the space occupied by the first tab 310 and the insulation spacer 100 as a whole.

In some embodiments, the first planar wall 168 and the first opening 161 intersect at a first opening edge 164. The first opening edge 164 is located on the first wall face 110. The first opening edge 164 extends along a length direction (that is, direction Y) of the first edge wall 151. The second planar wall 169 and the first opening 161 intersect at a second opening edge 165. The second opening edge 165 is located on the first edge wall 151. The second opening edge 165 extends along a length direction of the first edge wall 151. In other words, the first planar wall 168 extends from the first wall face 110 to the second wall face 120, and the second planar wall 169 extends from the first edge wall 151 to the second wall face 120. In addition, in this embodiment, both the first opening edge 164 and the second opening edge 165 extend along the length direction of the first edge wall 151 (an angle between the length direction of the first opening edge 164 and the length direction of the first edge wall 151 is less than forty-five degrees, and an angle between the length direction of the second opening edge 165 and the length direction of the first edge wall 151 is less than forty-five degrees). In the above structure, the structure of the first opening 161 achieves a closer match of the relative position between the electrode assembly 300 and the insulation spacer 100, and makes it convenient for the first tab 310 to pass through the insulation spacer 100.

The first planar wall 168 may intersect the first wall face 110 at a straight line. In this case, the first opening edge 164 is a straight line. The junction between the first planar wall 168 and the first wall face 110 may be designed to be a fillet or a chamfer. In this case, the first opening edge 164 is an arc face (in the case of a fillet) or a flat face (in the case of a chamfer) between the first planar wall 168 and the first wall face 110. Similarly, the second planar wall 169 may intersect the first edge wall 151 at a straight line. In this case, the second opening edge 165 is a straight line. The junction between the second planar wall 169 and the first edge wall 151 may be designed to be a fillet or a chamfer. In this case, the second opening edge 165 is an arc face (in the case of a fillet) or a flat face (in the case of a chamfer) between the second planar wall 169 and the first edge wall 151.

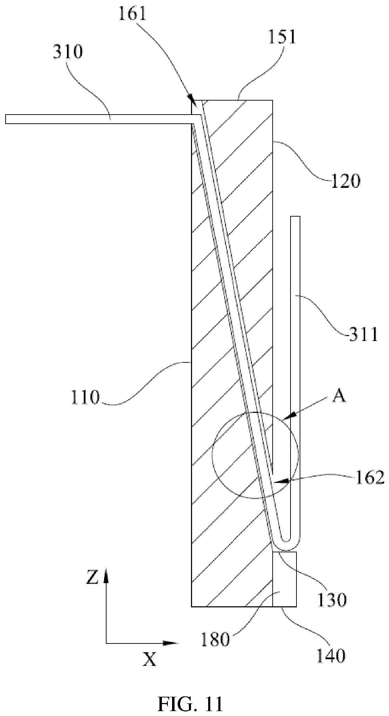

Referring to FIG. 5 to FIG. 8 together with FIG. 11, in an embodiment, viewed along a direction (that is, direction Z) perpendicular to the first wall face 110, a spacing L₃ between the first opening edge 164 and the second opening edge 165 satisfies: 0.5 ≤ L₂/L₃ ≤ 2. As an example, the value of the L₂/L₃ ratio may be 0.5, 1, 1.5, 2, or the like. In the above technical solution, the first tab 310 may be embedded downward to a specified depth along a direction perpendicular to the first edge wall 151. As an example, when the L₂/L₃ ratio is 0.5, viewed along the direction perpendicular to the first wall face 110, a half of the first tab 310 is down-embedded within the first opening 161. The applicant hereof finds that, when the spacing satisfies 0.5 ≤ L₂/L₃ ≤ 2, the first tab 310 is enabled to be down-embedded into the first opening 161, thereby avoiding occupation of an excessive space in the battery cell 10, and also making the first opening 161 be of an appropriate size that facilitates processing.

In some embodiments, the annular edge wall further includes a second edge wall 152. The second edge wall 152 is disposed between the first wall face 110 and the second wall face 120. The second edge wall 152 is arranged opposite to the first edge wall 151. In a specific embodiment, the first edge wall 151 and the second edge wall 152 may be arranged in parallel.

The first planar wall 168 and the second opening 162 intersect at a third opening edge 166. The third opening edge 166 extends along a length direction (that is, direction Y) of the second edge wall 152. The second planar wall 169 and the second opening 162 intersect at a fourth opening edge 167. The fourth opening edge 167 is located on one side, oriented away from the second edge wall 152, of the third opening edge 166. The fourth opening edge 167 extends along the length direction of the second edge wall 152. In this embodiment, both the third opening edge 166 and the fourth opening edge 167 extend along the length direction of the second edge wall 152 (an angle between the length direction of the third opening edge 166 and the length direction of the second edge wall 152 is less than forty-five degrees, and an angle between the length direction of the fourth opening edge 167 and the length direction of the second edge wall 152 is less than forty-five degrees). In the above structure, the structure of the second opening 162 achieves a closer match of the relative position between the electrode assembly 300 and the insulation spacer 100, and makes it convenient for the first tab 310 of the electrode assembly 300 to pass through the second wall face 120 of the insulation spacer 100.

Similarly, the second planar wall 169 may intersect the second wall face 120 at a straight line. In this case, the third opening edge 166 is a straight line. The junction between the second planar wall 169 and the second wall face 120 may be designed to be a fillet or a chamfer. In this case, the third opening edge 166 is an arc face (in the case of a fillet) or a flat face (in the case of a chamfer) between the second planar wall 169 and the second wall face 120. Similarly, the second planar wall 169 may intersect the second wall face 120 at a straight line. In this case, the fourth opening edge 167 is a straight line. The junction between the second planar wall 169 and the second wall face 120 may be designed to be a fillet or a chamfer. In this case, the second opening edge 165 is an arc face (in the case of a fillet) or a flat face (in the case of a chamfer) between the second planar wall 169 and the first edge wall 151.

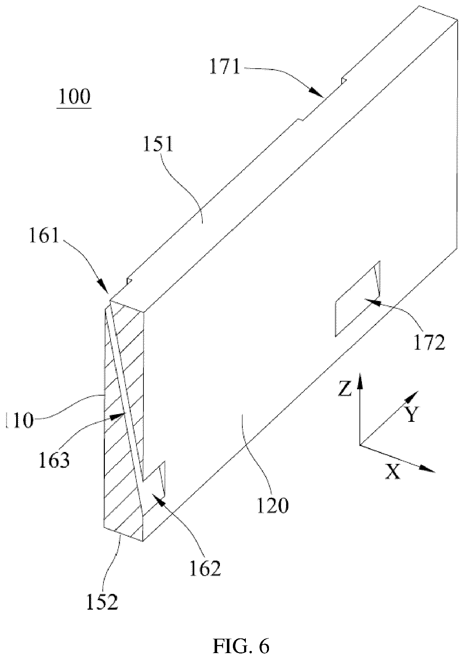

Referring to FIG. 6 to FIG. 7, along a direction (that is, direction Z) directed from the first edge wall 151 to the second edge wall 152, a distance L₄ from the fourth opening edge 167 to the first edge wall 151 and a distance L₅ from the third opening edge 166 to the second edge wall 152 satisfy: 1 ≤ L₄/L₅ ≤ 10. As an example, the value of the L₄/L₅ ratio may be 1, 3, 5, 7, 9, 10, or the like. In other words, the distance from the fourth opening edge 167 to the second edge wall 152 is less than the distance from the third opening edge 166 to the first edge wall 151. The third opening 171 is closer to the second edge wall 152. In this way, the first tab 310 is made to extend into the first channel 163 from a position close to the first edge wall 151 and then is led out from a position close to the second edge wall 152, thereby further facilitating the extension arrangement of the first tab 310.

In some embodiments, along a direction (that is, direction Z) directed from the first edge wall 151 to the second edge wall 152, a spacing L₆ between the third opening edge 166 and the fourth opening edge 167 as well as the thickness L₂ of the first tab 310 satisfy: 1 < L₂/L₆ ≤ 3. As an example, the value of the L₂/L₆ ratio may be 1.01, 1.1, 1.5, 2, 2.5, 3, or the like. The applicant hereof finds that when the spacing satisfies 1 < L₂/L₆ ≤ 3, the first tab 310 is facilitated to pass through the second opening 162, and the first opening 161 is made to be of an appropriate size.

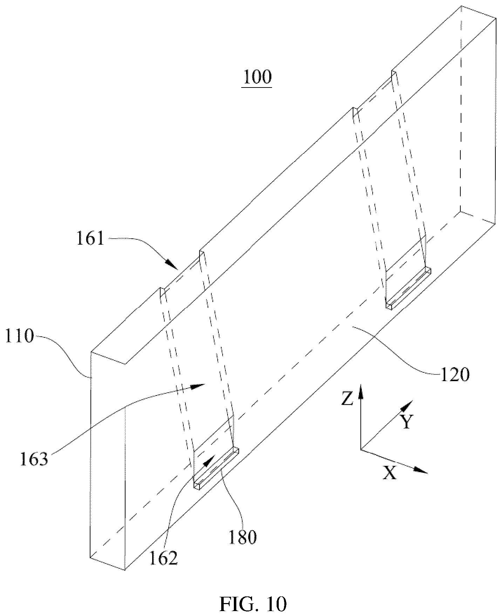

Referring to FIG. 10 to FIG. 12, in an embodiment, a raised portion 180 is disposed on the second wall face 120. The raised portion 180 is disposed between the second opening 162 and the second edge wall 152. The raised portion 180 can reduce the probability of a short circuit caused by contact between the first tab 310 and the housing 200 when the bent part of the first tab at the second opening 162 moves toward the second edge wall 152 and comes into contact with the housing of the battery cell 10, thereby improving the safety performance of the battery cell 10.

In some embodiments, the raised portion 180 includes a third wall face 130 oriented away from the second edge wall 152. The third wall face 130 and the second opening 162 intersect at the third opening edge 166. Arranged in this way, the third wall face 130 of the raised portion 180 can abut on the bent part of the first tab 310 at the second opening 162, thereby providing a support for the first tab 310 and improving the firmness of the positioning of the first tab 310.

Referring to FIG. 11, in an embodiment, the raised portion 180 includes a fourth wall face 140 oriented away from the first edge wall 151. The fourth wall face 140 and the second edge wall 152 are coplanar. The above technical solution can increase the structural strength of the raised portion 180.

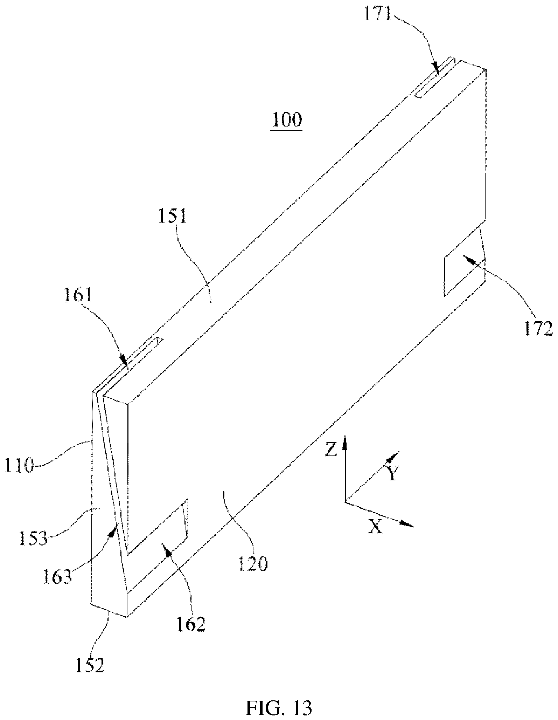

The first opening 161, the first channel 163, and the second opening 162 may all be disposed inside the insulation spacer 100 along the direction Y. Referring to FIG. 13 to FIG. 14, in an embodiment, the first opening 161, the first channel 163, and the second opening 162 may all be disposed at a lateral position of the insulation spacer 100 along the direction Y instead. Specifically, the annular edge wall further includes a third edge wall 153 located between the first edge wall 151 and the second edge wall 152. The third edge wall 153 is located between the first wall face 110 and the second wall face 120. The first opening 161, the second opening 162, and the first channel 163 all extend to the third edge wall 153 so that the first tab 310 is able to extend from the third edge wall 153 into the first channel 163. The first tab 310 passes through the first opening 161, the first channel 163, and the second opening 162 in sequence after extending into the first channel 163. In the above technical solution, the first tab 310 is enabled to extend into the first channel 163 from the third edge wall 153 without a need to extend into the first channel 163 from the first opening 161, thereby reducing the difficulty of extending the first tab 310 into the first channel 163, and reducing the processing cost of the battery cell 10.

When the second tab of the electrode assembly 300 does not need to be insulated from the housing 200 of the battery cell 10, the mating structure between the insulation spacer 100 and the second tab may be designed with reference to the structure in the prior art. When the second tab needs to be insulated from the housing 200 of the battery cell 10, in some embodiments, referring to FIG. 1 to FIG. 6, a third opening 171 is created on the first wall face 110 or the first edge wall 151. A fourth opening 172 is created on the second wall face 120. A second channel 173 is created inside the insulation spacer 100. One end of the second channel 173 communicates to the third opening 171, and another end of the second channel communicates to the fourth opening 172. The insulation spacer 100 is configured to enable a second tab of the electrode assembly 300 to pass through the third opening 171, the second channel 173, and the fourth opening 172 in sequence and then bend until the second tab closely fits the second wall face 120, where the second tab is of an opposite polarity to the first tab 310. The above technical solution can reduce the risk of a short circuit caused by contact between the second tab and the housing 200 of the battery cell 10, and also reduce or remove the tab adhesive on the second tab, thereby reducing the number of parts of the battery cell 10 and reducing the material cost of the battery cell 10.

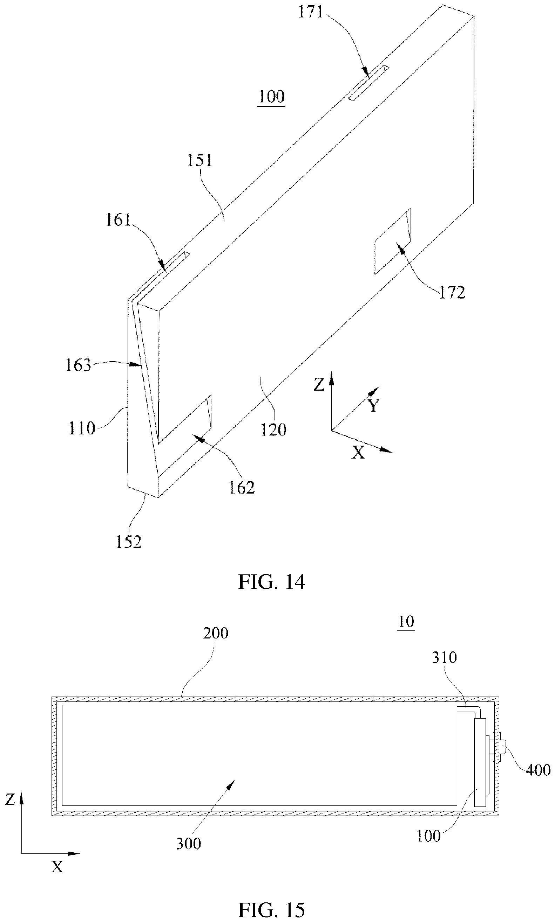

Referring to FIG. 15, a second aspect of this application further provides a battery cell 10. The battery cell 10 includes the insulation spacer 100 disclosed in any one of the above embodiments. The battery cell 10 further includes an electrode assembly 300, a feedthrough connector 400, and a housing 200. The housing 200 defines an accommodation cavity. Both the electrode assembly 300 and the insulation spacer 100 are disposed in the accommodation cavity. The feedthrough connector 400 passes through the housing 200. One end, located in the accommodation cavity, of the feedthrough connector 400 is electrically connected to the first tab 310. One end, located outside the housing 200, of the feedthrough connector 400 is configured to export electrical energy out of the battery cell 10.

The electrode assembly 300 is disposed on a side on which the first surface of the insulation spacer 100 is located. The electrode assembly 300 includes the first tab 310 and the second tab in the preceding embodiment. The first tab 310 passes through the first opening 161, the first channel 163, and the second opening 162 in sequence, and bends to closely fit the second wall face 120 or be spaced apart from the second wall face 120. The first tab 310 includes a connecting portion 311 located on a side on which the second wall face 120 of the insulation spacer 100 is positioned. The connecting portion 311 is configured to be electrically connected to the feedthrough connector 400. When the insulation spacer 100 includes a third opening 171, a second channel 173, and a fourth opening 172, the second tab passes through the third opening 171, the second channel 173, and the fourth opening 172 in sequence, and then bends until the second tab closely fits the second wall face 120 or is spaced apart from the second wall face 120.

A third aspect of this application further provides an electronic device. The electronic device includes the battery cell 10 disclosed in any one of the above embodiments.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. An insulation spacer, applicable to a battery cell, **characterized in that**
the insulation spacer comprises a first wall face and a second wall face distributed opposite to each other along a thickness direction of the insulation spacer, the first wall face is configured to face an electrode assembly of the battery cell, and the insulation spacer further comprises a first edge wall located between the first wall face and the second wall face; and
a first opening is created on the first wall face or the first edge wall, a second opening is created on the second wall face, a first channel is created inside the insulation spacer, one end of the first channel communicates to the first opening, another end of the first channel communicates to the second opening, and the insulation spacer is configured to enable a first tab of the electrode assembly to pass through the first opening, the first channel, and the second opening in sequence and then bend until the first tab closely fits or is spaced apart from the second wall face.

2. The insulation spacer according to claim 1, **characterized in that**
the first channel comprises a first planar wall, one end of the first planar wall extends to the first opening, and another end of the first planar wall extends to the second opening; and
the first planar wall is configured to be able to closely fit, or be spaced apart from, a wall face of the first tab, the wall face being distributed along a thickness direction of the first tab.

3. The insulation spacer according to claim 2, **characterized in that**
the first channel further comprises a second planar wall, one end of the second planar wall extends to the first opening, and another end of the second planar wall extends to the second opening;
the second planar wall is spaced apart from the first planar wall, and a clearance between the first planar wall and the second planar wall is configured to accommodate the first tab; and
a spacing L₁ between the first planar wall and the second planar wall as well as a thickness L₂ of the first tab satisfy: 2 ≤ L₁/L₂ ≤ 15.

4. The insulation spacer according to claim 3, **characterized in that**
an angle α between a plane formed by extending the first planar wall and a plane formed by extending the second planar wall satisfies: 0° ≤ α ≤ 45°.

5. The insulation spacer according to claim 3, **characterized in that**
the first opening is positioned at a junction between the first wall face and the first edge wall.

6. The insulation spacer according to claim 5, **characterized in that**
the first planar wall and the first opening intersect at a first opening edge, the first opening edge is located on the first wall face, and the first opening edge extends along a length direction of the first edge wall; and
the second planar wall and the first opening intersect at a second opening edge, the second opening edge is located on the first edge wall, and the second opening edge extends along a length direction of the first edge wall.

7. The insulation spacer according to claim 6, **characterized in that**
viewed along a direction perpendicular to the first wall face, a spacing L₃ between the first opening edge and the second opening edge satisfies: 0.5 ≤ L₂/L₃ ≤ 2.

8. The insulation spacer according to claim 6, **characterized in that**
the insulation spacer further comprises a second edge wall, the second edge wall is disposed between the first wall face and the second wall face, and the second edge wall is arranged opposite to the first edge wall;
the first planar wall and the second opening intersect at a third opening edge, and the third opening edge extends along a length direction of the second edge wall; and
the second planar wall and the second opening intersect at a fourth opening edge, the fourth opening edge is located on one side, oriented away from the second edge wall, of the third opening edge, and the fourth opening edge extends along the length direction of the second edge wall.

9. The insulation spacer according to claim 8, **characterized in that**
along a direction directed from the first edge wall to the second edge wall, a distance L₄ from the fourth opening edge to the first edge wall and a distance L₅ from the third opening edge to the second edge wall satisfy: 1 ≤ L₄/L₅ ≤ 10.

10. The insulation spacer according to claim 8, **characterized in that**
along a direction directed from the first edge wall to the second edge wall, a spacing L₆ between the third opening edge and the fourth opening edge as well as the thickness L₂ of the first tab satisfy: 1 < L₂/L₆ ≤ 3.

11. The insulation spacer according to claim 8, **characterized in that**
a raised portion is disposed on the second wall face, and the raised portion is disposed between the second opening and the second edge wall.

12. The insulation spacer according to claim 11, **characterized in that**
the raised portion comprises a third wall face oriented away from the second edge wall, and the third wall face and the second opening intersect at the third opening edge.

13. The insulation spacer according to claim 11, **characterized in that**
the raised portion comprises a fourth wall face oriented away from the first edge wall, and the fourth wall face and the second edge wall are coplanar.

14. The insulation spacer according to claim 1, **characterized in that**
the insulation spacer further comprises a third edge wall located between the first edge wall and the second edge wall, and the third edge wall is located between the first wall face and the second wall face; and
the first opening, the second opening, and the first channel all extend to the third edge wall so that the first tab is able to extend from the third edge wall into the first channel, and the first tab passes through the first opening, the first channel, and the second opening in sequence after extending into the first channel.

15. The insulation spacer according to claim 1, **characterized in that**
a third opening is created on the first wall face or the first edge wall, a fourth opening is created on the second wall face, a second channel is created inside the insulation spacer, one end of the second channel communicates to the third opening, another end of the second channel communicates to the fourth opening, and the insulation spacer is configured to enable a second tab of the electrode assembly to pass through the third opening, the second channel, and the fourth opening in sequence and then bend until the second tab closely fits the second wall face, wherein the second tab is of an opposite polarity to the first tab.

16. A battery cell, **characterized in that** the battery cell comprises:
the insulation spacer according to any one of claims 1 to 15;
an electrode assembly, disposed on a side on which a first surface of the insulation spacer is positioned, wherein the electrode assembly comprises the first tab, the first tab passes through the first opening, the first channel, and the second opening in sequence, and bends to closely fit the second wall face, and the first tab comprises a connecting portion located on a side on which the second wall face of the insulation spacer is positioned;
a housing, defining an accommodation cavity, wherein both the electrode assembly and the insulation spacer are disposed in the accommodation cavity; and
a feedthrough connector, passing through the housing, wherein an end portion, located in the accommodation cavity, of the feedthrough connector is electrically connected to a wall face, oriented away from the insulation spacer, of the connecting portion.

17. An electronic device, **characterized in that** the electronic device comprises the battery cell according to claim 16.
